(19) Europäisches Patentamt
European Patent Office
Office européen des brevets

(11) **EP 1 855 918 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **05850511.6**

(22) Anmeldetag: **30.12.2005**

(51) Int Cl.:
***B60R 21/01*** *(2006.01)*

(86) Internationale Anmeldenummer:
**PCT/EP2005/057235**

(87) Internationale Veröffentlichungsnummer:
**WO 2006/092183 (08.09.2006 Gazette 2006/36)**

(54) **VERFAHREN UND VORRICHTUNG ZUM BESTIMMEN EINES INITIALSCHWIMMWINKELS ZUR SCHLEUDERERKENNUNG BEI ÜBERROLLSENSIERUNG**

METHOD AND DEVICE FOR DETERMINING AN INITIAL ATTITUDE ANGLE IN ORDER TO DETECT SWERVING DURING OVERROLL DETECTION

PROCEDE ET DISPOSITIF POUR DETERMINER UN ANGLE DE FLOTTAISON INITIALE POUR DETERMINER LE DERAPAGE DANS LA DETECTION DE TONNEAUX

(84) Benannte Vertragsstaaten:
**DE ES FR GB**

(30) Priorität: **28.02.2005 DE 102005008976**

(43) Veröffentlichungstag der Anmeldung:
**21.11.2007 Patentblatt 2007/47**

(73) Patentinhaber: **ROBERT BOSCH GMBH**
**70442 Stuttgart (DE)**

(72) Erfinder:
- **LICH, Thomas**
  **71409 Schwaikheim (DE)**
- **SCHMID, Michael**
  **70806 Kornwestheim (DE)**
- **KRÖNINGER, Mario**
  **77815 Buehl (DE)**

(56) Entgegenhaltungen:
| | |
|---|---|
| **AU-B2- 724 744** | **DE-A1- 4 305 155** |
| **DE-A1- 10 149 112** | **DE-A1- 10 239 406** |
| **DE-A1- 19 708 508** | **DE-A1- 19 828 338** |

EP 1 855 918 B1

**Beschreibung**

STAND DER TECHNIK

Die vorliegende Erfindung betrifft ein Verfahren und eine Vorrichtung zum Bestimmen eines Initialschwimmwinkels zur Schleudererkennung bei Überrollsensierung.

Die Druckschriften DE 100 19 416 A1, DE 100 19 417 A1 und DE 100 19 418 A1 beschreiben generelle Konzepte zur Überrollsensierung mit Verfahren beziehungsweise Vorrichtungen, welche auf der Auswertung eines Drehratensensors und zweier Beschleunigungssensoren basieren, die im zentralen Airbagsteuergerät integriert sind. Der Drehratensensor ermittelt nach dem Kreiselprinzip die Rotationsgeschwindigkeit um die Fahrzeuglängsachse, die Beschleunigungssensoren messen zusätzlich die Fahrzeugbeschleunigung in Quer- und Hochachse des Fahrzeugs. Im Hauptalgorithmus wird die Drehrate ausgewertet. Mit den Messwerten der Beschleunigungssensoren lässt sich einerseits die Art des Überschlags erkennen, andererseits dienen diese Werte der Plausibilitätsprüfung. Erkennt der Drehratenalgorithmus einen Überschlag, werden die Sicherheitsvorkehrungen nur bei gleichzeitiger Freigabe durch die Plausibilitätskontrolle aktiviert.

Eine rechtzeitige Auslöseentscheidung bei Überschlagen mit hoher seitlicher Beschleunigung durch Einbeziehen eines so genannten Schwimmwinkels und einer Quergeschwindigkeit des Fahrzeugs sowie einer Fahrzeugkippbewegung wird in der Druckschrift DE 101 49 112 A1 beschrieben.

Die Bestimmung des Schwimmwinkels in einem Winkelbereich, der größer als 20˚ ist, und daraus der lateralen Geschwindigkeit, wie sie für die Überschlagserkennung benötigt wird, ist jedoch nicht durch bekannte Verfahren ausführbar, wie sie z.B. in der Fahrdynamikregelung eingesetzt werden. Diese sind nur für Winkelbereiche unterhalb von 10˚ geeignet, wie z.B. Verfahren, die ein Modell aus Reifencharakteristik und die Seitenführungskraft verwenden. Der geringe Gültigkeitsbereich ist darin begründet, dass eine Fahrdynamikregelung bei größeren Schwimmwinkeln nicht mehr erfolgreich durchgeführt werden kann.

Die DE 102 39 406 A1 beschreibt eine Vorrichtung zur Bestimmung von Schwimmwinkeln größer als 20˚ und der lateralen Geschwindigkeit zur Überschlagserkennung. Diese Vorrichtung teilt den Fahrzeugzustand in zeitlich aufeinander folgende Phasen auf und bestimmt den Schwimmwinkel und die Fahrzeugquergeschwindigkeit aus den Fahrzeugdynamikdaten in den einzelnen Phasen unterschiedlich. Nachteilig dabei ist, dass der Initialschwimmwinkel für das "Aufsetzen" des Algorithmus ein konstanter Parameter ist, der abhängig von der Applikation und vom Fahrzeug ist.

VORTEILE DER ERFINDUNG

Das erfindungsgemäße Verfahren und die erfindungsgemäße Vorrichtung zum Bestimmen eines Initialschwimmwinkels zur Schleudererkennung bei Überrollsensierung mit den Merkmalen der unabhängigen Patentansprüche 1 und 6 ermöglicht es, dass eine kontinuierliche Initialwinkelschätzung in der ersten Zustandsphase, die den stabilen Fahrzustand des Fahrzeugs kennzeichnet durchgeführt wird. Das hat den demgegenüber den Vorteil, dass auch bei schon größeren Schwimmwinkeln ein korrektes "Aufsetzen" des Algorithmus gegeben ist, woraus sich dann eine korrekte Lateralgeschwindigkeit ergibt.

Die Grundidee der Erfindung wird im Folgenden erläutert.

Kern der Erfindung ist eine kontinuierliche Initialschwimmwinkeleinschätzung, welche im Falle eines Ausbrechens des Fahrzeugs zum Startwinkel des Algorithmus verwendet wird. Der ermittelte Startwinkel kann dabei Größen von $\pm 0$ bis zu einem parametrisierbaren Werte in der Größenordnung von 40˚ annehmen.

In der Praxis treten kritische Fahrmanöver auf, welche speziell bei niedrigen Reibwerten, also auf Eis oder nasser Fahrbahn, zu einem langsamen Anstieg des Schwimmwinkels führen können. Kann dabei das Fahrdynamikregelsystem, wie z.B. ESP, nicht mehr aktiv unterstützen, so erhöht sich die Wahrscheinlichkeit für einen potentiellen Überrollvorgang, bei dem das Fahrzeug lateral in den Seitenstreifen gerät. Dabei können bis zu einem gewissen Zeitpunkt die für den Fahrdynamik-Analyse Algorithmus (FDA oder VDA) bei langsamen Drifts kaum relevante Signale auftreten. Dieses bedeutet, dass die für die Bestimmung der lateralen Geschwindigkeit verwendeten Größen wie Giergeschwindigkeit, Longitudinal- und Lateralbeschleunigung sowie Längsgeschwindigkeit derart sind, dass diese nicht über die eingestellten Schwellwerte zur Aktivierung des Algorithmus führen. Werden die Schwellen jedoch weiter abgesenkt, führt dies zu Misuse-Situationen, die sich in unerwünschten Effekten ausbilden können. Ein wesentlicher Vorteil der Erfindung besteht darin, im Hintergrund eine kontinuierliche Initialschwimmwinkelschätzung vorzunehmen und bei Überschreiten der kritischen Schwellen dem Fahrdynamik-Algorithmus einen für die jeweilige Situation angepassten Initalschwimmwinkel zur VerFügung zu stellen.

Daraus ergibt sich im Weiteren der Vorteil, dass die Robustheit des Algorithmus bei verbesserter Schätzung der Lateralgeschwindigkeit nicht verschlechtert wird. Die auftretende Differenz bzw. Phasenverschiebung zwischen tatsächlichem und abgeschätztem Schwimmwinkel kann somit minimiert werden, und die Bestimmung der Lateralgeschwindigkeit kann bei erreichen der kritischen Geschwindigkeit exakt wiedergegeben werden. Damit ist eine verbesserte Auslöseperformance zu erzielen, da der Zeitpunkt exakter bestimmt werden kann, an dem sich ggf. ein Fahrzeug im Falle eines Soil-Trip Events überschlägt oder nicht. Damit erhöht sich auch die Zuverlässigkeit von anderen Anwendungen, die die Lateralgeschwindigkeit als Eingabegröße verwenden.

Ein Verfahren zum Bestimmen eines Initialschwimmwinkels zur Schleudererkennung bei Überrollsensierung eines Überrollvorgangs eines Fahrzeugs mit mindestens einer Sensorik für fahrzeugdynamische Signale und einem Steuergerät zur Aktivierung von Rückhaltemitteln, welches den Fahrzustand des Fahrzeugs in zeitlich aufeinander folgende Zustandsphasen aufteilt, mit folgenden, in der ersten Zustandsphase kontinuierlich ausgeführten Verfahrensschritten:

(S1) Berechnen einer Schwimmwinkeländerung aus den fahrzeugdynamischen Signalen;

(S2) Vergleichen der berechneten Schwimmwinkeländerung mit einem vorgebbaren Schwellwert; und

(S3) Bestimmen des Initialschwimmwinkels anhand der berechneten Schwimmwinkeländerung in Abhängigkeit von dem Schwellwert für einen ersten Bereich von geringen Schwimmwinkeländerungen oder für einen zweiten Bereich von größeren Werten von Schwimmwinkeländerungen.

Dabei ist es vorteilhaft, dass der Verfahrensschritt (S3) folgende Teilschritte aufweist:

(S3.1) Rücksetzen bzw. Einlesen der Ausgangswerte der fahrzeugdynamischen Signale mittels einer Resetlogik;

(S3.2) Bestimmen des Initialschwimmwinkels durch Integrieren der berechneten Schwimmwinkeländerung mit einer Integrationskonstanten im ersten Bereich; oder

(S3.3) Bestimmen des Initialschwimmwinkels durch Integrieren der berechneten Schwimmwinkeländerung ohne Integrationskonstante im zweiten Bereich;

(S3.4) Ausgeben des so bestimmten Initialschwimmwinkels für die zweite Zustandsphase bei einem Ausbrechzeitpunkt; oder

(S3.5) Rückkehr zu Verfahrensschritt, wenn der Vergleich mit dem vorgebbaren Schwellwert wieder den ersten Bereich ergibt.

Die Integrationskonstante ist parametrisierbar und weist Werte <1 auf. Daraus ergibt sich vorteilhaft, dass der Schwimmwinkel auf Grund der kontinuierlichen Integration und der damit verbundenen Problematik von Langzeitdrift nicht zu Verfälschungen führt.

Es ist bevorzugt, den ersten Bereich von geringen Schwimmwinkeländerungen ($\dot{\beta}$) für $0° < |\dot{\beta}| < 4°$ und den zweite Bereich von größeren Schwimmwinkeländerungen ($\dot{\beta}$) für $Y° < |\dot{\beta}| < X°$ auszubilden, und dass der Parameter Y und X vorgebbar bzw. parametrisierbar ist. Hierbei lassen sich vorteilhaft Geradeausfahrten von dynamischen Kurvenfahrten trennen, wobei bei Kurvenfahrten die Wahrscheinlichkeit eines Ausbrechens größer list.

Eine Vorrichtung gemäß dem Verfahren zur Bestimmung eines zur Schleudererkennung bei Überrollsensierung eines Überrollvorgangs eines Fahrzeugs mit mindestens einer Sensorik für fahrzeugdynamische Signale und einem Steuergerät zur Aktivierung von Rückhaltemitteln, welches den Fahrzustand des Fahrzeugs in zeitlich aufeinander folgende Zustandsphasen aufteilt, ist dadurch gekennzeichnet, dass die Vorrichtung eine Berechnungseinheit zur kontinuierlichen Berechnung des Initialschwimmwinkels aufweist.

Bei einer besonders bevorzugten Ausführungsform weist die Berechnungseinheit eine Initialschwimmwinkelbestimmungseinheit auf mit:

- einem ersten Logikblock zur Ermittlung einer Schwimmwinkeländerung aus den fahrzeugdynamischen Signalen;
- einem zweiten Logikblock zur Ermittlung einer Schwimmwinkeländerung aus dep fahrzeugdynamischen Signalen;
- einem Vergleichsblock zum Vergleich der Schwimmwinkeländerung aus dem zweiten Logikblock und zur Ausgabe eines Vergleichssignals;
- einem dritten Logikblock zur Auswahl einer Subphaseneinheit anhand des Vergleichssignals aus dem Vergleichsblock;
- einem Integrationsblock zur Integration der vom ersten Logikblock gelieferten Schwimmwinkeländerung;
- einer Resetlogik zum Rücksetzen bzw. Ermitteln der Ausgangswerte der fahrzeugdynamischen Signale;
- einer ersten Subphaseneinheit zur Berechnung des Initialschwimmwinkels mit einer ersten Berechnungsvorschrift unter Verwendung der Ausgabewerte der Resetlogik und des Integrationsblocks;
- einem Ausgabeblock zur Ausgabe des berechneten Initialschwimmwinkels an eine nachfolgende zweite Zustandsphase; und mit
- einer Speichereinrichtung zur Speicherung von vorgebbaren Datenwerten.

Es ist vorteilhaft, dass die Berechnungseinheit als Bestandteil der Software des Steuergeräts ausgebildet ist, da somit kein zusätzlicher Bauraum für die erfindungsgemäße Vorrichtung benötigt wird.

Vorteilhafte Ausgestaltungen und Weiterbildungen der Erfindung sind den Unteransprüchen und der Beschreibung unter Bezugnahme auf die Zeichnungen entnehmbar.

ZEICHNUNGEN

Die Erfindung wird nachfolgend anhand des in der Figur der Zeichnung angegebenen Ausführungsbeispiels näher erläutert.
Es zeigt dabei:

FIG. 1 eine grafische Darstellung eines Schwimmwinkelverlaufs in geschätzter Darstellung im Vergleich zu einem Referenzschwimmwinkel gemäß dem Stand der Technik;

FIG. 2 ein Zustandsdiagramm eines Fahrdynamikalgorithmus;

FIG. 3 ein Zustandsdiagramm eines Fahrdynamikalgorithmus in einer erfindungsgemäßen Ausführung;

FIG. 4 ein Blockschaltbild einer erfindungsgemäßen Ausführungsform einer Initialschwimmwinkelbestimmungseinheit;

FIG. 5 eine grafische Darstellung eines Schwimmwinkelverlaufs mit kontinuierlicher Abschätzung im Vergleich zu einem Referenzschwimmwinkel gemäß einer Ausführungsform der vorliegenden Erfindung; und

FIG.6 eine schematische Blockdarstellung einer erfindungsgemäßen Vorrichtung.

BESCHREIBUNG DER AUSFÜHRUNGSBEISPIELE

Die Bedeutung der passiven Sicherheit bei Fahrzeugüberschlägen ist sehr hoch, da ein großer Anteil von tödlichen Einzelfahrzeug-Unfällen auf einen Überschlag zurückgeführt werden kann. Im gesamten Unfallgeschehen nimmt der Fahrzeugüberschlag oder -überrollvorgang zur Zeit einen Anteil von rund 20 Prozent ein.

Vor diesem Hintergrund gibt es Konzepte für die Überrollsensierung, welche zum Beispiel einen Fahrzeugüberschlag bereits zu einem frühen Zeitpunkt erkennen können. Damit wird gewährleistet, dass Sicherheitsvorrichtungen wie Gurtstraffer, Kopfairbag und Überrollbügel rechtzeitig aktiviert werden und ein Verletzungsrisiko verringert wird. Bisherige Systeme zur Überschlagserkennung betrachten die Wankbewegung und die Beschleunigungen in x-, y- und z-Richtung des Fahrzeugs. Auf dieser Basis ist eine sichere Erkennung eines Überschlags des Fahrzeugs möglich. Die Entscheidung kann jedoch erst zu einem späten Zeitpunkt des Überrollvorgangs sicher getroffen werden, der typischerweise bei einem Wankwinkel von 20˚ bis 40˚ liegt. Bei bestimmten Fällen von Fahrzeugüberschlägen ist dies aber zu spät, z.B. bei so genannten Soil-Trips, bei denen das Fahrzeug auf den Randstreifen gerät und durch die unterschiedlichen Beschaffenheiten von Straße und Randstreifen ins Schleudern geraten kann. Eine solche Entscheidung zu spät zu treffen, kann die Insassen dabei nicht mehr hinreichend schützen, da sie durch eine hohe laterale Beschleunigung bereits eine Seitwärtsverlagerung erfahren haben, die den Nutzen von z.B. Windowairbags einschränkt.

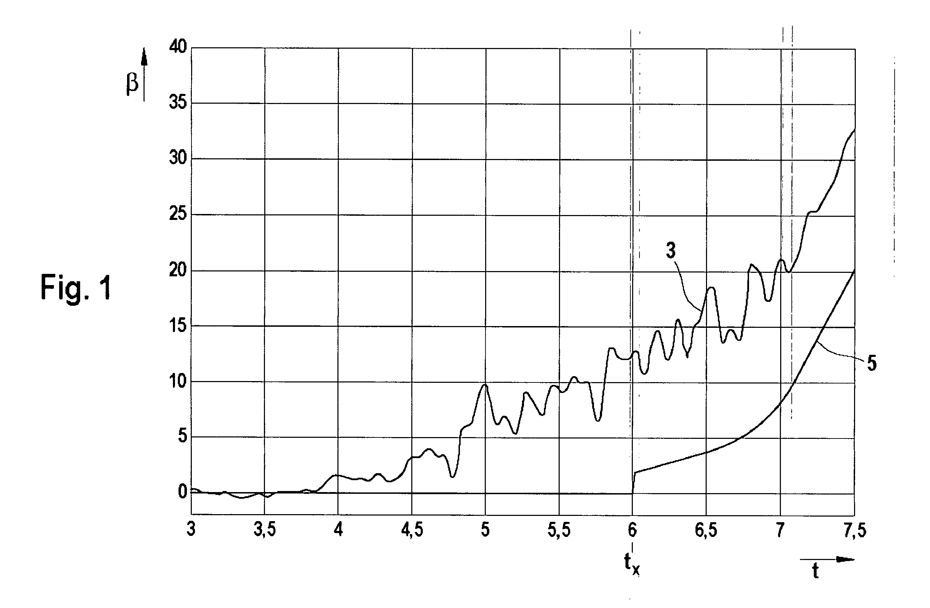

Um diese zu späte Entscheidung früher treffen zu können, wird bei einer Überschlagserkennung ein Schwimmwinkel des Fahrzeugs mit einbezogen, wie im Stand der Technik oben aufgeführt ist. Zur Illustration der Ausgangssituation, bei der die vorliegende Erfindung ansetzt, dient die Fig. 1, welche eine grafische Darstellung eines Schwimmwinkelverlaufs 5 in geschätzter Darstellung im Vergleich zu einem Referenzschwimmwinkel 3 zeigt.

Der tatsächliche Schwimmwinkel $\beta$ ist über der Zeit t als ein Referenzschwimmwinkel 3 in seiner Entwicklung bei einem Schleudervorgang aufgetragen. Mit der Kurve 5 ist ein zweiter, durch den Algorithmus geschätzter Schwimmwinkel dargestellt. Das Fahrzeug befindet sich in einem anfänglichen Fahrzustand, in dem der Referenzschwimmwinkel 3 zunächst gering ist, sich dann aber durch einen kritischer werdenden Fahrzustand erhöht, bis dass das Fahrzeug in einem Ausbrechzeitpunkt $t_x$ in einen Schleudervorgang eintritt. Zu diesem Zeitpunkt beträgt der zweite geschätzte Schwimmwinkel 5 mit seinem Startwert in diesem Beispiel 2˚. Dieser Startwert ergibt sich aus einer Konstanten, wie zum Stand der Technik bereits aufgeführt. Von diesem Startwert an wird der Schwimmwinkel nun im Algorithmus in Abhängigkeit von fahrdynamischen Werten weiter berechnet. Es ist deutlich zu erkennen, dass dieser berechnete Wert dem Verlauf des tatsächlichen Schwimmwinkels 3 folgt, jedoch ist eine Differenz von rund 11˚ zu verzeichnen, die auch als ein Phasenverzug bezeichnet wird.

Dieser zweite geschätzte Schwimmwinkel 5 wird nun zur Berechnung einer Lateralgeschwindigkeit $v_y$ mit folgender Gleichung verwendet:

$$v_y = v_x * \tan(\beta) \tag{1}$$

Hierbei ist $v_x$ die Fahrzeuggeschwindigkeit und $\beta$ der geschätzte Schwimmwinkel 5. Mit dem zum tatsächlichen Schwimmwinkel um 11° niedrigeren Schwimmwinkel $\beta$ ergibt sich demzufolge auch eine zu niedrige Lateralgeschwindigkeit, welche zu einer zu späten Auslösung von Rückhaltemitteln führen kann.

Die vorliegende Erfindung ermöglicht es nun, den Startwert des Schwimmwinkels kontinuierlich zu berechnen, so dass er zum Ausbrechzeitpunkt $t_x$ dem tatsächlichen Schwimmwinkel möglichst genau entspricht, so dass der Algorithmus eine weitere korrekte Berechnung durchführen kann.

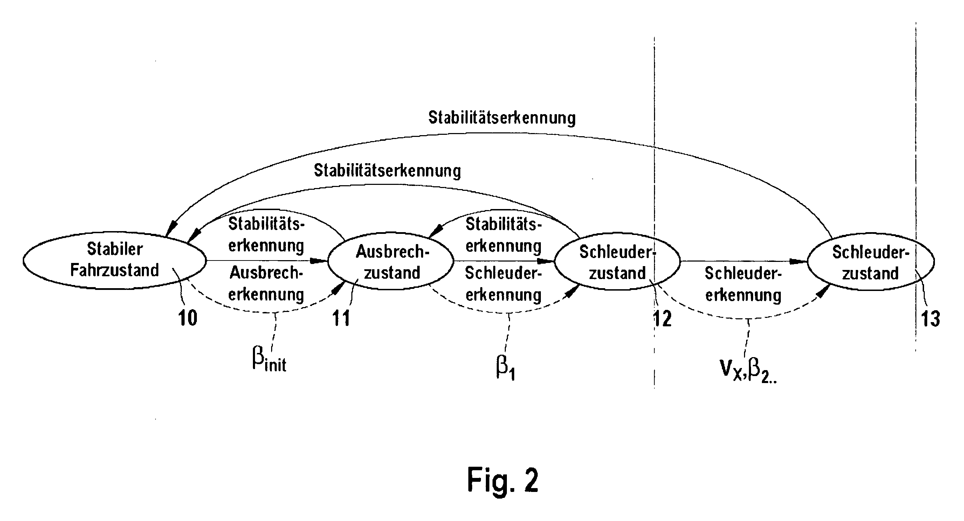

Eine mögliche Realisierung wird in einer beispielhaften Ausführungsform im Folgenden beschrieben. Hierzu zeigt die Fig. 2 ein Zustandsdiagramm eines Fahrdynamikalgorithmus mit vier Zustandsphasen 10, 11, 12 und 13, welche eine Fahrzeug bei einem Schleudervorgang nacheinander durchläuft. Hierbei geben durchgezogene Pfeile Übergänge zwischen den Zustandsphasen an, gestrichelte Pfeile die Übergabe von Werten zwischen den Zustandsphasen.

Die derzeitige Anordnung des Fahrdynamikalgorithmus ist dabei durch eine Erfassung der Längsgeschwindigkeit $v_x$, der Gierrate $\omega_z$ (d.h. der Drehrate um die Hochachse des Fahrzeugs), der lateralen Beschleunigung $a_y$, und optional der Raddrehzahlen, der Längsbeschleunigung $a_x$ und einer Schätzung des Schwimmwinkels $\beta$ (die jedoch nur für kleine Schwimmwinkel Gültigkeit hat) gekennzeichnet.

Die erste Zustandsphase 10 kennzeichnet den stabilen Fahrzustand des Fahrzeugs. Zum Ausbrechzeitpunkt wird der Startwert des Schwimmwinkels als Initialschwimmwinkel $\beta_{init}$ an die zweite Zustandsphase 11 übergeben, die den Ausbrechzustand des Fahrzeugs kennzeichnet. Hierbei wird der Schwimmwinkel $\beta_1$ ausgehend vom Initialschwimmwinkel $\beta_{init}$ berechnet und der dritten Zustandsphase 12 bei Schleudererkennung übergeben, welche den Schleuderzustand des Fahrzeugs kennzeichnet. Eine weitere Berechnung von $v_x$ und $\beta_2$ zur Übergabe an eine dritte Zustandsphase 13 erfolgt darauf. Wird während der Zustandsphasen 11, 12 und 13 erkannt, dass wieder ein stabiler Zustand eintritt, so kehrt der Algorithmus in die jeweils vorhergehende Zustandsphase zurück.

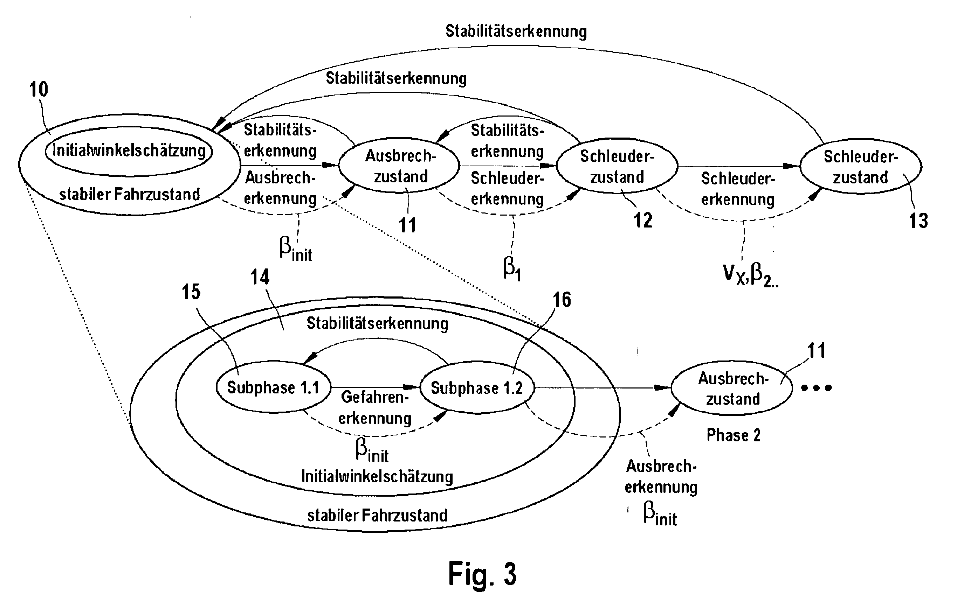

Die Bestimmung des Initialschwimmwinkels $\beta_{init}$ erfolgt in der ersten Zustandsphase 10, was in Fig. 3 dargestellt ist. Die Zustandsphase 10 ist mit einer Initialschwimmwinkelbestimmungseinheit 14 vergrößert gezeigt, welche eine erste Subphaseneinheit 15 und eine zweite Subphaseeinheit 16 aufweist. Die dabei verbesserte Initialschwimmwinkelabschätzung läuft im Hintergrund in der ersten Zustandsphase 10 ab. Der in der zweiten Subphaseneinheit 16 ermittelte Initialschwimmwinkel wird dann bei Ausbrucherkennung des Fahrzeugs als Initialschwimmwinkel $\beta_{init}$ an die zweite Zustandsphase 11 übergeben.

In der Zustandsphase 10 befindet sich das Fahrzeug im Normalbetrieb, d.h. in einem stabilen Fahrzustand. Hierbei werden auch Kurvenfahrten mit einem geringen Schwimmwinkel $\beta$ mit einbezogen. Liegt dieser Zustand vor, so sind der Schwimmwinkel $\beta$ und die laterale Geschwindigkeit $v_y$ für eine Überschlagserkennung nich von Interesse, da sie zu gering sind, um eine Überschlagsbewegung einzuleiten. Die geschätzte laterale Geschwindigkeit $v_y$ ergibt sich damit zu Null, welches für andere Algorithmen sichtbar ist. In dieser ersten Zustandsphase 10 können die beiden Subphaseneinheiten 15 und 16 ausgeführt werden. Hierzu wird eine Fallunterscheidung getroffen:

Für die erste Subphaseneinheit 15 gilt: $0° < |\beta| < Y°$

Die erste Subphaseneinheit 15 ist relevant für "normales" Fahren, bei dem kleine Schwimmwinkel $\beta$ in der Größenordnung von $Y \approx 4°$ auftreten. Dabei berechnet sich der geschätzte Initialschwimmwinkel $\beta_{init}$ aus:

$$\beta_{init} = Const \cdot \beta_0 + \int \dot{\beta} \, dt \tag{2}$$

Die Integrationskonstante Const ist dabei parametriesierbar und weist Werte <1 auf, so dass der Schwimmwinkel auf Grund der kontinuierlichen Integration einer Schwimmwinkeländerung $\dot{\beta}$ und der damit verbundenen Problematik von Langzeitdrift nicht zu Verfälschungen führt. Hierbei ist $\beta_0$ ein applikations- und fahrzeugabhängiger Wert für den anfänglichen Schwimmwinkel $\beta$. Dabei ergibt sich die Schwimmwinkeländerung $\dot{\beta}$ aus den Größen der Longitudinal- und Querbeschleunigung $a_x$, $a_y$ sowie der Gierrate $\omega_z$ und der Fahrzeuggeschwindigkeit $v_x$, welche der Longitudinalgeschwindigkeit gleichgesetzt wird. werden von einer im Fahrzeug befindlichen Sensorik geliefert. Die Schwimmwinkeländerung $\dot{\beta}$ berechnet sich wie folgt:

$$\dot{\beta} = \omega_z - \frac{a_y \cos(\beta) + a_x \cos(\beta)\sin(\beta)}{v_x} \approx \omega_z - \frac{a_y}{v_x} \text{ für kleine } \beta \qquad (3)$$

Für die zweite Subphaseneinheit 16 gilt: $4° < |\beta| < X°$
Hierbei ist Y und X parametriesierbar.

Kommt es zu einem Aufbau von größeren Schwimmwinkeländerungen, wie z.B. bei sehr dynamischem Fahren in Autobahnauffahrten bzw. -abfahrten, dann wird über die einfache Beziehung

$$\dot{\beta} \approx \omega_z - \frac{a_y}{v_x} \text{ für kleine } \beta \qquad (4)$$

 ein Schwellwert abgefragt, so dass ein Wechsel von der ersten Subphaseneinheit 15 in die zweite Subphaseneinheit 16 erfolgt. Dann ergibt sich in der zweiten Subphaseneinheit 16 die Berechnung des Initialschwimmwinkels $\beta_{init}$ aus:

$$\beta_{init} = \beta_0 + \int \dot{\beta} \, dt \qquad (5)$$

Die dabei verwendete Schwimmwinkeländerung $\dot{\beta}$ berechnet sich nach Gleichung (3).

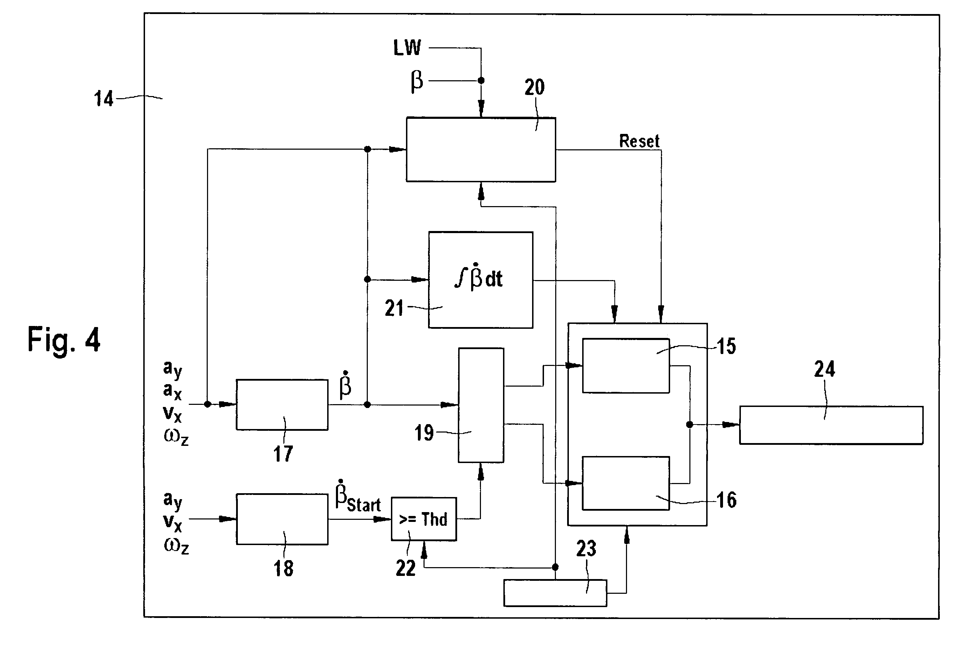

Daraus ergibt sich zusammengefasst eine in Fig. 4 dargestellte beispielhafte erfindungsgemäße Ausführungsform einer Initialschwimmwinkelbestimmungseinheit 14 in Blockschaltbildform für die Bestimmung des Initialschwimmwinkels $\beta_{init}$.

Die fahrdynamischen Größen $a_x$, $a_y$, $v_x$, $\omega_z$ werden aus einem im Fahrzeug vorhandenen Fahrdynamiksystem bzw. von zugehörigen Sensoren geliefert und von einer ersten und zweiten Logikblock 17, 18 gemäß Gleichung (3) zur Bestimmung der Schwimmwinkeländerung $\dot{\beta}$ verwendet. Gleichzeitig werden diese und die Schwimmwinkeländerung $\dot{\beta}$ als Eingangsgrößen einer Resetlogik 20 zugeleitet, die auch eine Information eines Lenkwinkels LW und eines von der Fahrdynamik bereitgestellten anfänglichen Schwimmwinkels $\beta$ erhält.

Ein Vergleichsblock 22 vergleicht die Schwimmwinkeländerung $\dot{\beta}$ mit einem vorgebbaren Schwellwert und leitet das Ergebnis einem dritten Logikblock 19 zu, welcher dementsprechend entscheidet, welche Subphaseneinheit 15, 16 zur Bestimmung des Initialschwimmwinkels $\beta_{init}$ verwendet wird. Dieses ist die oben erwähnte Fallunterscheidung.

Ein Integrationsblock 21 führt zunächst die Integration der Schwimmwinkeländerung $\dot{\beta}$ für die Berechnungsvorschriften (2) und (5) durch und leitet diese entsprechend der Fallunterscheidung im dritten Logikblock 19 der ersten oder zweiten Subphaseneinheit 15, 16 zu.

Die erste Subphaseneinheit 15 führt die Bestimmung des Initialschwimmwinkels $\beta_{init}$ nach Gleichung (2) und die zweite Subphaseneinheit 16 nach Gleichung (5) durch.

Der so berechnete Initialschwimmwinkels $\beta_{init}$ wird an einen Ausgabeblock geleitet und steht dort der nächsten Zustandsphase zur Weiterleitung zur Verfügung.

Die Resetlogik 20 ermittelt Anfangswerte und Randbedingungen für die Berechnungen in den Subphaseneinheiten 15 und 16. Sie führt auch eine Rückstellung auf Ausgangswerte aus, wenn eine Stabilität erkannt wird.

Eine Speichereinrichtung 23 dient zur Speicherung des vorgebbaren Schwellwertes und weiterer applikations- und fahrzeugabhängiger Werte.

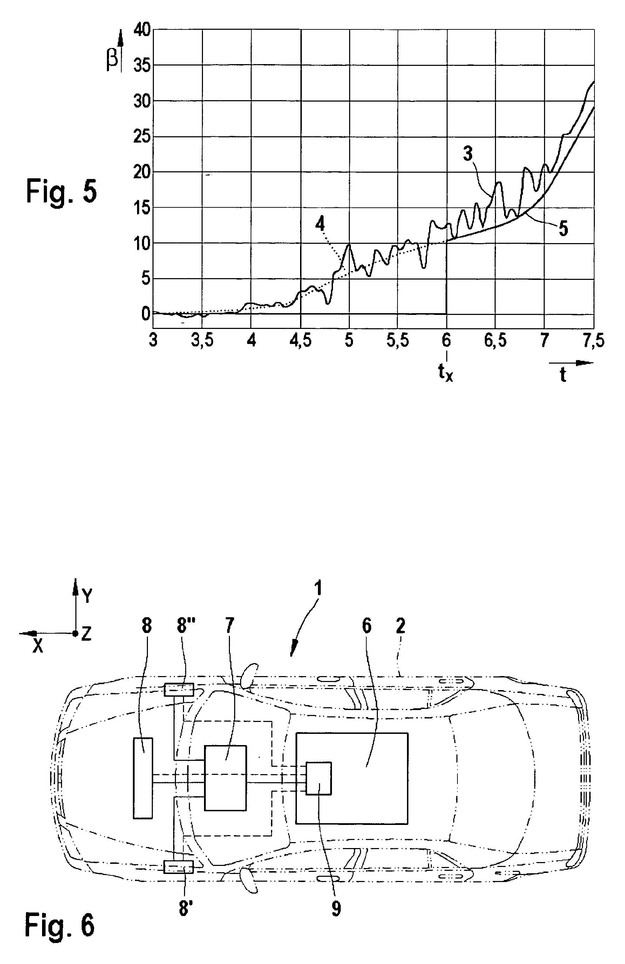

Fig. 5 zeigt schließlich die Auswirkung der Anwendung des erfindungsgemäßen Verfahrens zum Bestimmen des Initialschwimmwinkels $\beta_{init}$. Hierbei stellt die gestrichelte Kurve mit der Bezeichnung 4 den ersten geschätzten Initialschwimmwinkel $\beta_{init}$ dar, der im Ausbrechzeitpunkt $t_x$ an den Algorithmus für die zweite Zustandsphase 11 übergeben wird. Es ist deutlich zu erkennen, dass die erfindungsgemäße Bestimmung des Initialschwimmwinkel $\beta_{init}$ dem mittleren Verlauf des Referenzschwimmwinkels als tatsächlichem Schwimmwinkel folgt, wobei im Ausbrechzeitpunkt $t_x$ keine bzw. nur eine geringe Differenz zum tatsächlichen Schwimmwinkel vorliegt und der Verlauf des von dem Algorithmus in den weiteren Zustandsphasen berechneten zweiten geschätzten Schwimmwinkels 5 dem Verlauf des tatsächlichen Schwimmwinkels mit sehr geringer Differenz folgt.

Daraus erhöht sich die Zuverlässigkeit des Überrollalgorithmus vorteilhaft, indem die Schätzung der Lateralgeschwindigkeit verbessert ist.

Fig. 6 zeigt eine schematische Blockdarstellung einer erfindungsgemäßen Vorrichtung 1 in einem Fahrzeug 2. Hierbei ist eine Sensorik 8, 8', 8" mit einem Systemsteuergerät 7 verbunden, welches beispielsweise eine Fahrdy-

namikregelung ist. Die Bezugzeichen 8' und 8" beziehen sich zum Beispiel auf Seitenbeschleunigungs- und Raddrehzahlsensoren. Die von der Sensorik 8, 8', 8" abgetasteten Signalwerte werden an eine Berechnungseinheit 9 im Steuergerät 6 weitergeleitet. Die Sensorik 8, 8', 8" kann auch vollständig oder nur zum Teil an der Berechnungseinheit 9 angeschlossen sein. Die Berechnungseinheit 9 führt die Bestimmung des Initialschwimmwinkels $\beta_{init}$ durch.

Die Erfindung ist nicht auf die oben beschriebenen Ausführungsbeispiele beschränkt, sondern auf vielfältige Art und Weise modifizierbar.

Auch die Zuverlässigkeit von anderen Anwendungen, welche die Lateralgeschwindigkeit als Eingabegröße verwenden, kann erhöht werden. Als Beispiel sei die Aktivierung bzw. die verbesserte Auslösungsperformance bei der Seitencrashauslösung genannt.

Die Berechnungseinheit 9 kann softwaremäßig als ein Bestandteil bzw. ein Unterprogramm der Software des Steuergeräts 6 ausgeführt sein.

Es ist auch denkbar, dass die Berechnungseinheit 9 separat oder als ein Bestandteil des Systemsteuergeräts 7 sein kann.

**Patentansprüche**

1. Verfahren zum Bestimmen eines Initialschwimmwinkels ($\beta_{init}$) zur Schleudererkennung bei Überrollsensierung eines Überrollvorgangs eines Fahrzeugs (2) mit mindestens einer Sensorik (8, 8', 8") für fahrzeugdynamische Signale ($a_x$, $a_y$, $v_x$, $\omega_z$, LW, $\beta_0$) und einem Steuergerät (6) zur Aktivierung von Rückhaltemitteln, welches den Fahrzustand des Fahrzeugs (2) in zeitlich aufeinander folgende Zustandsphasen (10, 11, 12, 13) aufteilt, wobei die erste Zustandsphase (10) den stabilen Fahrzustand des Fahrzeugs kennzeichnet, mit folgenden, in der ersten Zustandsphase (10) kontinuierlich ausgeführten Verfahrensschritten, **gekennzeichnet durch:**

   S1) Berechnen einer Schwimmwinkeländerung ($\dot{\beta}$) aus den fahrzeugdynamischen Signalen ($a_x$, $a_y$, $v_x$, $\omega_z$, LW, $_\beta$);
   S2) Vergleichen der berechneten Schwimmwinkeländerung ($\dot{\beta}$) mit einem vorgebbaren Schwellwert; und
   S3) Bestimmen des Initialschwimmwinkels ($\beta_{init}$) anhand der berechneten Schwimmwinkeländerung ($\dot{\beta}$) in Abhängigkeit von dem Schwellwert für einen ersten Bereich von geringen Schwimmwinkeländerungen ($\dot{\beta}$) oder für einen zweiten Bereich von größeren Werten von Schwimmwinkeländerungen ($\dot{\beta}$).

2. Verfahren nach Anspruch 1,
   **dadurch gekennzeichnet,**
   **dass** der Verfahrensschritt S3) folgende Teilschritte aufweist:

   S3.1) Rücksetzen bzw. Einlesen der Ausgangswerte der fahrzeugdynamischen Signale ($a_x$, $a_y$, $v_x$, $\omega_z$, LW, $\beta_0$) mittels einer Resetlogik (20);
   S3.2) Bestimmen des Initialschwimmwinkels ($\beta_{init}$) durch Integrieren der berechneten Schwimmwinkeländerung ($\dot{\beta}$) mit einer Integrationskonstanten im ersten Bereich; oder
   S3.3) Bestimmen des Initialschwimmwinkels ($\beta_{init}$) durch Integrieren der berechneten Schwimmwinkeländerung ($\dot{\beta}$) ohne Integrationskonstante im zweiten Bereich;
   S3.4) Ausgeben des so bestimmten Initialschwimmwinkels ($\beta_{init}$) für die zweite Zustandsphase (11) bei einem Ausbrechzeitpunkt ($t_x$); oder
   S3.5) Rückkehr zu Verfahrensschritt S2), wenn der Vergleich mit dem vorgebbaren Schwellwert wieder den ersten Bereich ergibt.

3. Verfahren nach Anspruch 2,
   **dadurch gekennzeichnet,**
   **dass** die Integrationskonstante parametrisierbar ist und Werte <1.aufweist.

4. Verfahren nach einem der Ansprüche 1 bis 3,
   **dadurch gekennzeichnet,**
   **dass** der erste Bereich von geringen Schwimmwinkeländerungen ($\dot{\beta}$) für $0° < |\beta| < Y°$ und der zweite Bereich von größeren Schwimmwinkeländerungen ($\dot{\beta}$) für $Y° < |\beta| < X°$ gilt.

5. Verfahren nach Anspruch 4,
   **dadurch gekennzeichnet,**
   **dass** der Parameter Y und X vorgebbar bzw. parametrisierbar ist.

**6.** Vorrichtung (1) zur Bestimmung eines zur Schleudererkennung bei Überrollsensierung eines Überrollvorgangs eines Fahrzeugs (2) mit mindestens einer Sensorik (8, 8', 8") für fahrzeugdynamische Signale ($a_x$, $a_y$, $v_x$, $\omega_z$, LW, $\beta_0$) und einem Steuergerät (6) zur Aktivierung von Rückhaltemitteln, welches den Fahrzustand des Fahrzeugs (2) in zeitlich aufeinander folgende Zustandsphasen (10, 11, 12, 13) aufteilt,
**dadurch gekennzeichnet,**
**dass** die Vorrichtung (1) eine Berechnungseinheit (9) zur kontinuierlichen Berechnung des Initialschwimmwinkels ($\beta_{init}$) in der ersten Zustandsphase (10), die den stabilen Fahrzustand des Fahrzeugs kennzeichnet, aufweist mit

- Mitteln zum Berechnen einer Schwimmwinkeländerung ($\dot{\beta}$) aus den fahrzeugdynamischen Signalen ($a_x$, $a_y$, $v_x$, $\omega_z$, LW, $\beta$)
- Mitteln zum Vergleichen der berechneten Schwimmwinkeländerung ($\dot{\beta}$) mit einem vorgebbaren Schwellwert
- Mitteln zum Bestimmen des Initialschwimmwinkels ($\beta_{init}$) anhand der berechneten Schwimmwinkeländerung ($\dot{\beta}$) mit einem vorgebbaren Schwellwert
- Mitteln zum Bestimmen des Initialschwimmwinkels ($\beta_{init}$) anhand der berechneten Schwimmwinkeländerung ($\dot{\beta}$) in Abhängigkeit von dem Schwellwert für einen ersten Bereich von geringen Schwimmwinkeländerungen ($\dot{\beta}$) oder für einen zweiten Bereich von größeren Werten von Schwimmwinkeländerungen ($\dot{\beta}$).

**7.** Vorrichtung (1) nach Anspruch 6,
**dadurch gekennzeichnet,**
**dass** die Berechnungseinheit (9) eine Initialschwimmwinkelbestimmungseinheit (14) aufweist mit:

- einem ersten Logikblock (17) zur Ermittlung einer Schwimmwinkeländerung ($\dot{\beta}$) aus den fahrzeugdynamischen Signalen ($a_x$, $a_y$, $v_x$, $\omega_z$,);
- einem zweiten Logikblock (18) zur Ermittlung einer Schwimmwinkeländerung ($\dot{\beta}_{Start}$) aus den fahrzeugdynamischen Signalen ($a_y$, $v_x$, $\omega_z$,);
- einem Vergleichsblock (22) zum Vergleich der Schwimmwinkeländerung ($\dot{\beta}_{Start}$) aus dem zweiten Logikblock (18) und zur Ausgabe eines Vergleichssignals;
- einem dritten Logikblock (19) zur Auswahl einer Subphaseneinheit (15, 16) anhand des Vergleichssignals aus dem Vergleichsblock (22);
- einem Integrationsblock (21) zur Integration der vom ersten Logikblock (17) gelieferten Schwimmwinkeländerung ($\dot{\beta}$);
- einer Resetlogik (20) zum Rücksetzen bzw. Ermitteln der Ausgangswerte der fahrzeugdynamischen Signale ($a_x$, $a_y$, $v_x$, $\omega_z$, LW, $\beta_0$);
- einer ersten Subphaseneinheit (15) zur Berechnung des Initialschwimmwinkels ($\beta_{init}$) mit einer ersten Berechnungsvorschrift unter Verwendung der Ausgabewerte der Resetlogik (20) und des Integrationsblocks (21);
- einem Ausgabeblock (24) zur Ausgabe des berechneten Initialschwimmwinkels ($\beta_{init}$) an eine nachfolgende zweite Zustandsphase (11); und mit
- einer Speichereinrichtung (23) zur Speicherung von vorgebbaren Datenwerten.

**8.** Vorrichtung nach Anspruch 7,
**dadurch gekennzeichnet,**
**dass** die Berechnungseinheit (9) als Bestandteil der Software des Steuergeräts (6) ausgebildet ist.

**Claims**

**1.** Method for determining an initial attitude angle ($\beta_{init}$) in order to detect skidding during roll-over sensing of a roll-over process of a vehicle (2), comprising at least one sensor system (8, 8', 8") for vehicle dynamics signals ($a_x$, $a_y$, $v_x$, $\omega_z$, LW, $\beta_0$), and having a control device (6) for activating restraining means which divides the driving state of the vehicle (2) into temporally consecutive state phases (10, 11, 12, 13) the first state phase (10) characterizing the stable driving state of the vehicle, having the following method steps executed continuously in the first state phase (10), **characterized by:**

S1) calculating an attitude angle change ($\beta$) from the vehicle dynamics signals ($a_x$, $a_y$, $v_x$, $\omega_z$, LW, $_\beta$);
S2) comparing the calculated attitude angle change ($\dot{\beta}$) with a prescribable threshold value; and
S3) determining the initial attitude angle ($\beta_{init}$) with the aid of the calculated attitude angle change ($\dot{\beta}$) as a function of the threshold value for a first range of small attitude angle changes ($\dot{\beta}$) or for a second range of larger values of attitude angle changes ($\dot{\beta}$).

2. Method according to Claim 1, **characterized in that** the method step (S3) has the following substeps:

> S3.1) resetting and/or inputting the initial values of the vehicle dynamics signals ($a_x$, $a_y$, $v_x$, $\omega_z$, LW, $\beta_0$) by means of a reset logic (20);
> S3.2) determining the initial attitude angle ($\beta_{init}$) by integrating the calculated attitude angle change ($\dot{\beta}$) with an aid of an integration constant in the first range; or
> S3.3) determining the initial attitude angle ($\beta_{init}$) by integrating the calculated attitude angle change ($\dot{\beta}$) without an integrating constant in the second range;
> S3.4) outputting the initial attitude angle ($\beta_{init}$) thus determined for the second state phase (11) at a breakaway instant ($t_x$); or
> S3.5) returning to method step S2) when comparison of the prescribable threshold value once again produces the first range.

3. Method according to Claim 2, **characterized in that** the integration constant is parameterizable and has a value <1.

4. Method according to one of Claims 1 to 3, **characterized in that** the first range of small attitude angle changes ($\dot{\beta}$) codes for $0° < |\beta| < Y°$, and the second range of larger attitude angle changes ($\dot{\beta}$) codes for $Y° < |\beta| < X°$.

5. The method as claimed in Claim 4, **characterized in that** the parameters Y and X are prescribable and/or parameterizable.

6. Device for determining an initial attitude angle ($\beta_{init}$) in order to detect skidding during roll-over sensing of a roll-over process of a vehicle (2), comprising at least one sensor system (8, 8', 8") for vehicle dynamics signals ($a_x$, $a_y$, $v_x$, $\omega_z$, LW, $\beta_0$), and having a control device (6) for activating restraining means which divides the driving state of the vehicle (2) into temporally consecutive state phases (10, 11, 12, 13) **characterized**
**in that** the device (1) has a calculation unit (9) for continuous calculation of the initial attitude angle ($\beta_{init}$) in the first state phase (10), which **characterizes** the stable driving state of the vehicle, having

> - means for calculating an attitude angle change ($\dot{\beta}$) from the vehicle dynamics signals ($a_x$, $a_y$, $v_x$, $\omega_z$, LW, ($\beta$);
> - means for comparing the calculated attitude angle change ($\dot{\beta}$) with a prescribable threshold value; and
> - means for determining the initial attitude angle ($\beta_{init}$) with the aid of the calculated attitude angle change ($\dot{\beta}$) with a prescribable threshold value; and
> - means for determining the initial attitude angle ($\beta_{init}$) with the aid of the calculated attitude angle change ($\dot{\beta}$) as a function of the threshold value for a first range of small attitude angle changes ($\dot{\beta}$) or for a second range of larger values of attitude angle changes ($\beta$).

7. Device (1) according to Claim 6, **characterized**
**in that** the calculation unit (9) has an initial attitude angle determining unit (14) having:

> - a first logic block (17) for determining an attitude angle change ($\dot{\beta}$) from the vehicle dynamics signals ($a_x$, $a_y$, $v_x$, $\omega_z$):
> - a second logic block (18) for determining an attitude angle change ($\beta_{Start}$) from the vehicle dynamics signals ($a_y$, $v_x$, $\omega_z$);
> - a comparison block (22) for comparing the attitude angle change ($\beta_{Start}$) from the second logic block (18), and for outputting a comparison signal;
> - a third logic block (19) for selecting a subphase unit (15, 16) with the aid of the comparison signal from the comparison block (22);
> - an integration block (21) for integrating the attitude angle change ($\dot{\beta}$) applied by the first logic block (17);
> - a reset logic (20) for resetting and/or determining the initial values of the vehicle dynamics signals ($a_x$, $a_y$, $v_x$, $\omega_z$, LW, $\beta_0$);
> - a first subphase unit (15) for calculating the initial attitude angle ($\beta_{init}$) with a first calculation rule by using the output values of the reset logic (20) and of the integration block (21);
> - an output block (24) for outputting the calculated initial attitude angle ($\beta_{init}$) to a downstream second state phase (11); and
> - a memory device (23) for storing prescribable data values.

8. Device according to Claim 7, **characterized in that** the calculation unit (9) is designed as a component of the software of the control device (6).

**Revendications**

1.  Procédé pour déterminer l'angle initial de flottement ($\beta_{init}$) pour détecter un dérapage lors de la détection de retournement pendant un tonneau effectué par un véhicule (2) à l'aide d'au moins un capteur (8, 8', 8") fournissant des signaux de la dynamique du véhicule ($a_x$, $a_y$, $v_x$, $\omega_z$, LW, $\beta_0$) et un appareil de commande (6) pour activer les moyens de retenue divisant l'état du véhicule (1) en des phases d'état (10, 11, 12, 13) successives, la première phase d'état (10) caractérisant l'état de roulage stable du véhicule, et comprenant les étapes de procédé suivantes exécutées en continu dans la première phase d'état (10), **caractérisé par**

    (S1) calcul de la variation de l'angle de flottement ($\dot{\beta}$) à partir des signaux de la dynamique du véhicule ($a_x$, $a_y$, $v_x$, $\omega_z$, LW, $\beta_0$),
    (S2) comparaison de la variation calculée de l'angle de flottement ($\dot{\beta}$) et une valeur de seuil prédéfinie, et
    (S3) détermination de l'angle initial de flottement ($\beta_{init}$) l'aide de la variation calculée de l'angle de flottement ($\dot{\beta}$) en fonction de la valeur de seuil d'une première plage de faibles variations d'angle de flottement ($\dot{\beta}$) ou d'une seconde plage de valeurs plus importantes de variations de l'angle de flottement ($\dot{\beta}$).

2.  Procédé selon la revendication 1,
    **caractérisé en ce que**
    l'étape de procédé (S3) est subdivisée en sous-étapes de procédé suivantes :

    (S3.1) remise à l'état initial ou enregistrement des valeurs initiales des signaux de dynamique du véhicule ($a_x$, $a_y$, $v_x$, $\omega_z$, LW, $\beta_0$) à l'aide d'une logique de remise à l'état initial (20),
    (S3.2) détermination de l'angle initial de flottement ($\beta_{init}$) en intégrant à la variation calculée d'angle de flottement ($\dot{\beta}$) avec une constante d'intégration dans la première plage ; ou
    (S3.3) détermination de l'angle initial de flottement ($\beta_{init}$) en intégrant la variation calculée d'angle de flottement ($\dot{\beta}$) sans constante d'intégration dans la seconde plage ;
    (S3.4) émission de l'angle initial de flottement ($\beta_{init}$) ainsi déterminé pour la seconde phase d'état (11) en un instant de rupture ($t_x$) ; ou
    (S3.5) retour à l'étape de procédé (S2) si la comparaison avec la valeur de seuil, prédéfinie, donne de nouveau la première plage.

3.  Procédé selon la revendication 2,
    **caractérisé en ce que**
    la constante d'intégration est paramétrable et présente des valeurs < 1.

4.  Procédé selon l'une quelconque des revendications 1 à 3,
    **caractérisé en ce que**
    la première plage de faibles variations de l'angle de flottement ($\dot{\beta}$) s'applique à $0° < |\beta| < Y°$, et
    la seconde plage des variations plus grandes de l'angle de flottement ($\beta$) s'applique à la plage suivante $Y° < |\beta| < X°$.

5.  Procédé selon la revendication 4,
    **caractérisé en ce que**
    les paramètres Y et X sont prédéfinis ou peuvent être paramétrés.

6.  Dispositif (1) pour déterminer un angle initial de flottement ($\beta_{init}$) pour détecter le dérapage à l'aide d'une détection de retournement d'un tonneau effectué par un véhicule (2) comprenant au moins un capteur (8, 8', 8") pour fournir des signaux de la dynamique du véhicule ($a_x$, $a_y$, $v_x$, $\omega_z$, LW, $\beta_0$) et un appareil de commande (6) pour activer les moyens de retenue, cet appareil subdivisant l'état de roulage du véhicule (1) en des phases d'état (10, 11, 12, 13) qui se suivent dans le temps,
    **caractérisé en ce que**
    le dispositif (1) comporte une unité de calcul (9) pour calculer en continu l'angle initial de flottement ($\beta_{init}$) dans la première phase d'état (10) qui caractérise l'état de roulage stable du véhicule, et comprenant

    - des moyens pour calculer une variation d'angle de flottement ($\dot{\beta}$) à partir des signaux de la dynamique du

véhicule ($a_x$, $a_y$, $v_x$, $\omega_z$, LW, ($\beta_0$),

- des moyens pour comparer la variation calculée d'angle de flottement ($\dot{\beta}$) à une valeur de seuil prédéfinie,
- des moyens pour déterminer l'angle initial de flottement ($\beta_{init}$) à l'aide de la variation calculée d'angle de flottement ($\dot{\beta}$) pour une valeur de seuil susceptible d'être prédéfinie,
- des moyens pour déterminer l'angle initial de flottement ($\beta_{init}$) à l'aide de la variation calculée d'angle de flottement ($\dot{\beta}$) en fonction de la valeur de seuil pour une première plage de petites variations d'angle de flottement ($\dot{\beta}$) ou pour une seconde plage correspondant à des valeurs plus grandes de variations d'angle de flottement ($\dot{\beta}$).

7. Dispositif (1) selon la revendication 6,
   **caractérisé en ce que**
   l'unité de calcul (9) comporte une unité (14) pour déterminer l'angle initial de flottement et comprenant :

   - un premier bloc logique (17) pour déterminer une variation d'angle de flottement ($\dot{\beta}$) à partir des signaux dynamiques du véhicule ($a_x$, $a_y$, $v_x$, $\omega_z$, LW, $\beta_0$),
   - un second bloc logique (18) pour déterminer une variation d'angle de flottement ($\dot{\beta}_{Start}$) à partir des signaux de dynamique de véhicule ($a_y$, $v_x$, $\omega_z$) ;
   - un bloc de comparaison (22) pour comparer la variation d'angle de flottement ($\dot{\beta}_{Start}$) fournie par le second bloc logique (18) et pour émettre un signal de comparaison,
   - un troisième bloc logique (19) pour sélectionner une unité de sous-phases (15, 16) à l'aide du signal de comparaison fourni par le bloc de comparaison (22) ;
   - un bloc d'intégration (21) pour intégrer la variation d'angle de flottement ($\dot{\beta}$) fournie par le premier bloc logique (17),
   - une logique de remise à l'état initial (20) pour remettre à l'état initial ou déterminer les valeurs de départ des signaux de dynamique du véhicule ($a_x$, $a_y$, $v_x$, $\omega_z$, LW, $\beta_0$),
   - une première unité de sous-phases (15) pour calculer l'angle initial de flottement ($\beta_{init}$) à l'aide d'une première prescription de calcul en utilisant les valeurs fournies par la logique de remise à l'état initial (20) et du bloc d'intégration (21),
   - un bloc de sortie (24) pour émettre l'angle initial de flottement ($\beta_{init}$) calculé pour une seconde phase d'état (11) suivante, et
   - une installation de mémoire (23) pour enregistrer les valeurs de données susceptibles d'être prédéfinies.

8. Dispositif selon la revendication 7,
   **caractérisé en ce que**
   l'unité de calcul (9) est constituée par le programme de l'appareil de commande (6).

Fig. 1

Fig. 2

Fig. 3

Fig. 4

Fig. 5

Fig. 6

**EP 1 855 918 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10019416 A1
- DE 10019417 A1
- DE 10019418 A1
- DE 10149112 A1
- DE 10239406 A1